# EUROPEAN PATENT SPECIFICATION

(11) **EP 2 719 964 B1**
(45) Date of publication and mention of the grant of the patent: **25.12.2019**
(21) Application number: 13162918.0
(22) Date of filing: 09.04.2013
(51) Int. Cl.: F24F 11/00

(54) **Display device of an air conditioner**
Anzeigevorrichtung einer Klimaanlage
Dispositif d'affichage d'un conditionneur d'air

(30) Priority: 12.10.2012 KR 20120113440
(43) Date of publication of application: 16.04.2014
(73) Proprietor: LG ELECTRONICS INC., Youngdungpo-gu Seoul 150-721 (KR)
(72) Inventor: Kim, Hyunjung, 641-711 Gyeongsangnam-do (KR); Jeon, Jongsun, 641-711 Gyeongsangnam-do (KR); Kim, Moonsung, 641-711 Gyeongsangnam-do (KR); Ryu, Grami, 641-711 Gyeongsangnam-do (KR); Lee, Jisun, 641-711 Gyeongsangnam-do (KR)
(74) Representative: Vossius & Partner Patentanwälte Rechtsanwälte mbB

(56) References cited:
- EP-A2- 1 065 079
- WO-A2-2007/097516
- CN-A- 102 003 775
- CN-A- 102 253 770
- CN-U- 201 672 622
- US-A1- 2009 208 333
- US-A1- 2010 286 801

## Description

The present disclosure relates to a display device of an air conditioner.

Air conditioners are home appliances that maintain indoor air into the most proper state according to use and purpose thereof. For example, air conditioners control indoor air into a cool state in summer and a warm state in winter. Furthermore, air conditioners control humidity of indoor air and adjust indoor air to a pleasant, clean state. Air conditioner, in which a refrigeration cycle is driven, may include a compressor, a condenser, an expansion device, and an evaporator.

Such air conditioner includes a suction part suctioning air within an indoor space, a heat exchanger exchanging heat with the air suctioned via the suction part, and a discharge part discharging the air heat-exchanged in the heat exchanger into the indoor space. Also, the air conditioner may include a blowing fan for generating an air flow from the suction part to the discharge part.

When power of the air conditioner is ON and a command for execution of a specific mode is inputted, the compressor and the blowing fan may be driven to perform a cooling cycle corresponding to the specific mode. The specific mode may include a cooling mode, a warming mode, and a dehumidification mode.

Typical air conditioners are configured such that a user directly operates the input part provided in the air conditioner so as to select a specific mode. Those air conditioners are provided with a display part on which information (hereinafter referred to as operation information) on operation of the air conditioner is displayed.

When the input part is operated, a changed figure of the operation information is displayed.

In the case of typical air conditioners, since the input part is a button type, it is inconvenient for a user to operate. Also, the window of the display part changed whenever a button is pushed is difficult to operate, and thus a user may not easily operate the air conditioner.

Therefore, many interests are focused on easily implementing the configuration of the input part and the display part for operating the air conditioner.

CN 102 003 775 (A) discloses a touch screen of an air conditioner, that comprises a front panel of an indoor unit of the air conditioner and is characterized by comprising a capacitive touch film and a display screen.

WO 2007/097516 (A2) relates to a control method of an air conditioner which can download image files stored in an external memory unit such as a USD memory and an SD card can be downloaded and can convert the data capacity of the downloaded image files.

The object of the present invention is achieved by the inventions defined in the claims.

Embodiments of the present invention provide a display device of an air conditioner which is convenient to operate.

In an aspect of the present invention, there is provided a display device of an air conditioner including: a film part including a displayable image; a controller determining whether or not to display the displayable image on the basis of operation information recognized by the film part; a light emitting part illuminating light toward the film part; and a display part provided on a panel of the air conditioner to enable a touch input, and operated by the light illuminated from the illumination part, wherein the display part includes a display area displaying operation information of the air conditioner, and an input area inputting a command concerning the operation information, and the controller controls the display part such that the operation information displayed on the display area is changed and displayed according to an input in the input area.

In another aspect of the present invention, there is provided a display device of an air conditioner including: a display part displaying information concerning operation of the air conditioner; and a controller changing a content displayed on the display part on the basis of information inputted via the display part, wherein the display part includes a wheel or wheel-like input part having a circular or elliptical shape; an input area defined within the wheel or wheel-like input part to enable an input of information on the operation of the air conditioner; and a display area provided on one side of the input area to change a display content according to a content inputted into the input area.

A display device of an air conditioner comprises: a film part including a displayable image; a controller configured to determine whether or not to display the displayable image on the basis of operation information of the air conditioner recognized by the film part; a light emitting part configured to illuminate light toward the film part; and a display part provided on a panel of the air conditioner to enable a touch input, and on which the light illuminated from the light emitting part acts, wherein the display part comprises a display area for displaying operation information of the air conditioner, and an input area for allowing a user to input a command concerning the operation information, and the controller is configured to control the display part such that the operation information displayed on the display area is changed and/or displayed according to an input in the input area.

Preferably, the display area forms at least a portion of an inner region of the input area.

The display area may be disposed within the input area.

Further, the input for changing the operation information of the air conditioner may be made possible through another area except for the display area within the input area or the display area.

Furthermore, the display part comprises a wheel input part having a circular or elliptical shape. And the display area and the input area are disposed on an inner area of the wheel input part.

In addition, the wheel input part comprises:
a first line extended in one direction from a center of the wheel input part toward a circumferential surface; and a second line extended in another direction from the center of the wheel input part toward the circumferential surface; wherein the input area is an inner area defined by the first line and the second line within the wheel input part.

Moreover, the first line may be configured to display first information on the operation of the air conditioner thereon. And the second line may be configured to display second information on the operation of the air conditioner thereon.

Besides, the first information may be one of a set temperature of the air conditioner and an intensity of wind discharged from the air conditioner, and the second information may be the other.

Additionally, the operation information displayed on the display area may comprise an operation mode defined in the air conditioner.

Herein, the operation information may comprise a plurality of the operation modes. And the controller may be configured so that when an inner region of the input area is touched, an operation mode displayed on the display area is changed according to a preset sequence.

Preferably, the input area comprises a plurality of selectable display sub-parts. And the controller may be configured so that information displayed on the display area when one of the plurality of display sub-parts is selected is different from information displayed on the display area when another display sub-part is selected.

Further, the input area may include a direction adjusting part for adjusting an air discharge direction of the air conditioner. Furthermore, the direction adjusting part may comprise a plurality cf direction adjusting sub-parts which are divided and disposed at positions corresponding to the air discharge directions.

Additionally, the input area may be defined by a plurality of lines extended in a radial direction from a center of the wheel input part, and outer circumferential surfaces of the wheel input part.

Moreover, when the input area is one time touched, the information displayed on the display area may be changed in a set sequence.

Besides, when the input area is kept being touched for a set time or longer, the information displayed on the display area may be changed in a set sequence.

The details of one or more embodiments are set forth in the accompanying drawings and the description below. Other features will be apparent from the description and drawings, and from the claims.
Fig. 1 is a perspective view illustrating the configuration of an air conditioner according to a first embodiment of the present invention.
Fig. 2 is a schematic view illustrating the configuration of a display part according to the first embodiment of the present invention.
Fig. 3 is a sectional view illustrating the configuration of a display device according to a first embodiment of the present invention.
Fig. 4 is a sectional view illustrating the configuration of a film part according to the first embodiment of the present invention.
Fig. 5 is a schematic view illustrating the operating figure a wheel input part according to the first embodiment of the present invention.
Fig. 6 is a schematic view illustrating the configuration of a display part according to a second embodiment not part of the present invention.
Fig. 7 is a schematic view illustrating the configuration of an air conditioner according to a third embodiment not part of the present invention.
Fig. 8 is a schematic view illustrating the configuration of a display part according to the third embodiment not part of the present invention.
Fig. 9 is a schematic view illustrating the configuration of a display part according to a fourth embodiment not part of the present invention.

Reference will now be made in detail to the embodiments of the present disclosure, examples of which are illustrated in the accompanying drawings.

Hereinafter, with reference to the drawings, specific embodiments of the present invention are described.

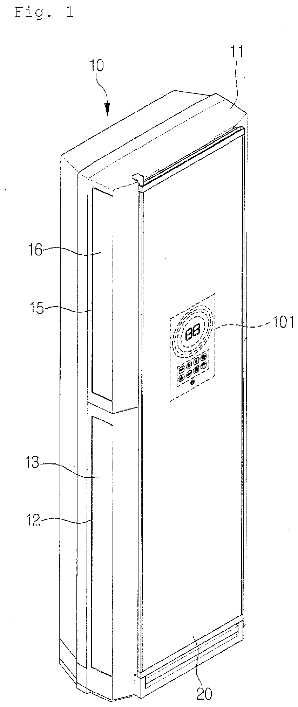

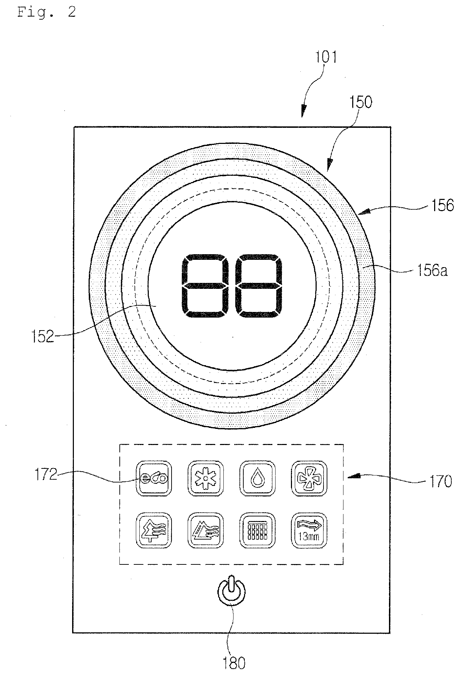

Fig. 1 is a perspective view illustrating the configuration of an air conditioner according to a first embodiment of the present invention, and Fig. 2 is a schematic view illustrating the configuration of a display part according to the first embodiment of the present invention.

Referring to Fig. 1, an air conditioner 10 according to a first embodiment of the present invention includes a suction part 12, a discharging part 15, and a case 11 forming an appearance thereof. The air conditioner 10 illustrated in Fig. 1 may be an indoor unit installed in an indoor room to discharge air.

The suction part 12 may be formed at a lower side of the case 11. A suction vane 13 for opening or closing the suction part 12 is provided on one side of the suction part 12. The suction vane 13 is disposed rotatably.

The discharging part 15 may be formed at an upper side of the case 11. A discharging vane 16 for opening or closing the discharging part 15 is provided on one side of the discharging part 15. The discharging vane 16 is disposed rotatably.

A front panel 20 is provided on a front side of the case 11. The front panel 20 is provided with a display part 101 displaying information on the operation of the air conditioner 10. The display part 101 may be a touch screen type display.

Referring to Fig. 2, the display part 101 according to the first embodiment of the present invention includes an area (display area) displaying predetermined information, and an area (input area) inputting a user's command.

In detail, the display part 101 includes a power input part 180 capable of selecting ON/OFF of the air conditioner 10, a mode input part 170 capable of selecting operation modes provided to the air conditioner 10, and a wheel-like input part 150 having a wheel shape.

The power input part 180 may be disposed at a lower side of the display part 101. The power input part 180 may maintain the status displayed on the front panel 20 regardless of ON/OFF of the air conditioner 10.

ON/OFF of the air conditioner 10 may be selected via the power input part 180. That is, one time pushing of the power input part 180 allows the air conditioner 10 to be changed into ON status, and again one time pushing allows the air conditioner 10 to be changed into OFF status. The power input part 180 may be lit brightly regardless ON/OFF of the air conditioner 10.

The mode input part 170 defines some area of the entire area of the display part 101 and may be understood to be an input area selectable by a user.

A mode display part 172 displaying various operation modes of the air conditioner 10 is included within the mode input part 170. The mode display part 172 is configured in an icon form including a predetermined shape corresponding to the operation mode. As examples of the various operation modes, there are cooling mode, warming mode, air cleaning mode, power saving mode, moisture removing mode, and wind blowing mode, which are classified according to the operating ways of the air conditioner.

The mode display part 172 may be understood to be an input part selectable by a user while displaying a specific operation mode. That is, the mode display part 172 may be an input part.

The mode input part 170 may be a display which is not displayed on the front panel 20 when the air conditioner 10 is in OFF, and is displayed on the front panel 20 when the air conditioner 10 is in ON.

In detail, a light source is provided behind the mode input part 170, and is in OFF when the air conditioner 10 is in OFF and is in ON when the air conditioner 10 is in ON.

An icon corresponding to the present operation mode may be formed so as to be discriminated from other icons. In an example, the icon of the current operation mode may be indicated by yellow, and the remaining icons may be indicated by white, or the icon of the current operation mode may be indicated by a twinkling specific color and the remaining icons may be indicated by a cloudy specific color.

In summary, one mode for operation may be selected through the mode input part 170. That is, when one of a plurality of mode display parts 172 is touched, the air conditioner 10 may be operated in an operation mode corresponding to the touched one, and the touched mode display part 172 may be indicated by a different color or a brighter intensity of illumination so as to be discriminated from other mode display parts.

The wheel input part 150 may be understood to be an input part to intuitively show a user that the wheel input part 150 may be operated in a rotation direction of the wheel, in order to input information on operations of the air conditioner.

The wheel input part 150 defines some area of the entire area of the display part 101 and may be understood to be an input area selectable by a user. The wheel input part 150 may have a circular or elliptical shape of which inside and outside may be divided by circumferential lines.

The wheel input part 150 includes a temperature display part 152 displaying information on a current temperature of a conditioning space (indoor space) or a set temperature of the air conditioner 10, and a wind intensity display part 156 displaying the intensity of wind discharged from the air conditioner 10.

The temperature display part 152 may be understood to be a display area on which the set temperature of the air conditioner 10 or the current temperature of the indoor space is displayed. The temperature display part 152 is disposed at an inner center of the wheel input part 150.

The wind intensity display part 156 includes a plurality of circumferential lines 156a enclosing an outer side of the temperature display part 152. The circumferential lines 156a may have a circular or elliptical shape. One of the plurality of circumferential lines 156a may be spaced apart at an outer side from a neighboring circumferential line to enclose the neighboring circumferential line.

In an example, the plurality of circumferential lines 156a may be four as illustrated in Fig. 2. Of course, the number of the plurality of circumferential lines 156a is not limited to four, but may be two or more.

The plurality of circumferential lines 156a may be displayed brighter, i.e., activated as it goes to the outermost circumferential line from the innermost circumferential line according to the intensity of the wind discharged from the air conditioner 10.

In an example, when the intensity of wind is weakest in Fig. 2, the wind intensity display part 156 may be configured such that the innermost circumferential line 156a is lit brightly, and when the intensity of wind is strongest, the wind intensity display part 156 may be configured such that all of the four circumferential lines are lit brightly.

Meanwhile, the wind intensity display part 156 may function as a display area displaying the intensity of wind and at the same time as an input area capable of recognizing a user's manipulation. In an example, information on the set temperature value may be inputted through the display area of the wind intensity display part 156.

In summary, the wind intensity display part 156 may be configured such that the display area at least partially overlaps the input area. Description related to this function will be provided later with reference to the accompanying drawings.

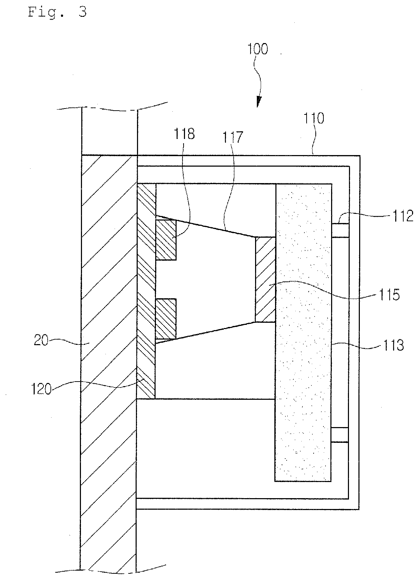

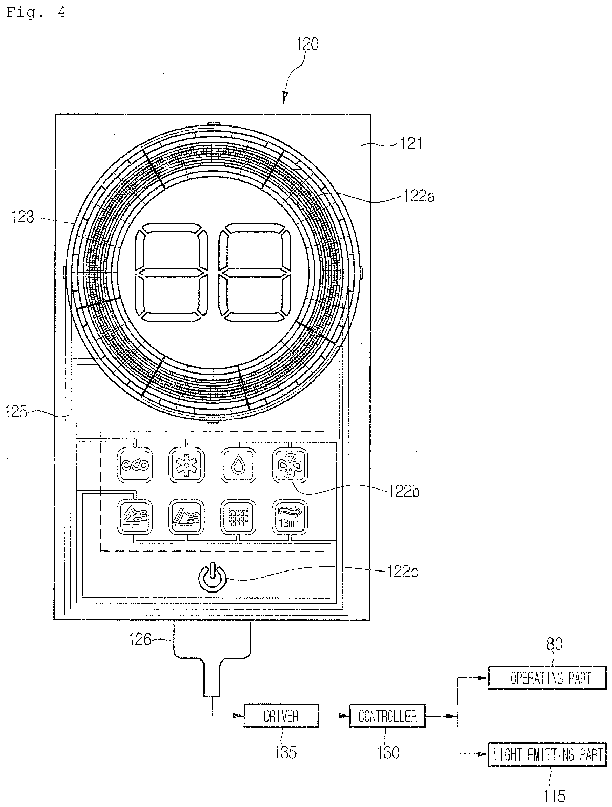

Fig. 3 is a perspective view illustrating the configuration of a display device according to a first embodiment of the present invention, and Fig. 4 is a schematic view illustrating the configuration of a film part according to the first embodiment of the present invention.

Referring to Fig. 3, the air conditioner 10 according to the first embodiment of the present invention may be provided with a display device 100. The display device 100 may be understood to be a device which is disposed behind the front panel 20 to form the display part 101.

The display device 100 includes a control box 110 coupled to the front panel 20 behind the front panel 20, and a printed circuit board (PCB) 113 disposed within the control box 110 and provided with a controller 130 (see Fig. 4) controlling the display part 101. The PCB 113 may be fixed in the control box 110 by a supporter 112.

The display device 100 includes a light emitting part 115 coupled in front of the PCB 113, a reflector 117 reflecting light emitted from the light emitting part 115, a film part 120 coupled in front of the reflector 117, and a guide part 118 guiding the light reflected by the reflector 117 toward the film part 120. The light emitting part 115 may be a light emitting diode (LED).

When information is inputted through the front panel 20, the film part 120 recognizes the input of information and delivers the input information to the controller 130. The controller 130 may determine the area to be displayed based on the delivered information to operate the light emitting part 115 such that information corresponding to the input information may be displayed to the outside through the display part 101.

The light emitted from the light emitting part 115 acts on the reflector 117 and the guide part 118 and then moves forward.

The light may act on a portion corresponding to at least a portion of the areas printed on the film part 120, i.e., the power input part 180, the mode input part 170 and the wheel input part 150 to brightly light the corresponding icon or pattern. As a result, the display part 101 may be implemented on the front panel 20.

Referring to Fig. 4, patterns corresponding to the plurality of input parts 150, 170, 180 are printed on the film part 120 according to the first embodiment of the present invention.

In detail, the film part 120 includes an indium tin oxide (ITO) film 121, and a pattern part 125 provided on one side of the ITO film 121.

The ITO film 121 is a film made of ITO which is a compound of an indium oxide (In2O3) and a tin oxide (SnO2), and has a sheet resistance of not more than 103 Ω/sq and a transmittance of not less than 80%. The ITO film 121 may be configured by attaching an ITO film on a polyester film and then patterning the ITO film through an etching.

Patterns corresponding to the input parts 150, 170, 180 of the display part 101 may be printed on the ITO film 121. In detail, the ITO film 121 includes a wheel print part 122a corresponding to the wheel input part 150, a mode print part 122b corresponding to the mode input part 170 and a power print part 122c corresponding to the power input part 180.

The pattern part 125 is configured to be connected to the print parts 122a, 122b, and 122c, recognize information touched on the respective input parts 150, 170, and 180, and transmit the recognized information to an output terminal 126. The pattern part 125 may be configured in a silver ink pattern.

The wheel print part 122a includes a plurality of lattice parts 123 arranged spaced apart by a predetermined distance from one another so as to sense the positions touched along the circumferences of the wheel pattern. The lattice parts 123 may be named "detection lines" in that they detect touched points. The plurality of lattice parts 123 may be distributed uniformly along the entire circle (or ellipse) of the wheel.

The plurality of lattice parts 123 are extended in a radial direction across the plurality of circumferential lines 156a formed in the wind intensity display part 156. When a user touches the lattice parts 123 in an outer direction of the wheel input part 150 from a center of an inner area of the wheel input part 150, number of the lattice parts 123 which have been touched may be detected.

In the course touching the lattice parts 150 in the outer circumferential direction, the user may intuitively perceive that he (or her) rotates the wheel clockwise or counterclockwise.

Herein, the term "touch" may be defined by specific information being recognized in the air conditioner 10 when a touch tool, i.e., the user's hand or a touch pen contacts the display part 101 or is located within a set distance.

In an example, the case specific information is recognized by the air conditioner 10 includes a case a change in pressure or charge (static capacitance) as touched is recognized. Hereinafter, the term "touch" will be described under this concept.

Meanwhile, although it is illustrated that the plurality of lattice parts 123 are extended from the innermost circumferential line 156a of the plurality of circumferential lines 156a toward the inner direction, the plurality of lattice parts 123 may be further extended toward the outer direction of the outermost circumferential line 156a by the set length, unlike the illustrated case. Herein, the outermost circumferential line may be understood to constitute the outer circumferential surface of the wheel input part 150.

Therefore, even when a user touches the display part 101 in the rotation direction of the wheel at a point spaced apart by a set distance in the outer direction from the outer circumferential surface of the wheel input part 150, it may be recognized whether or not the corresponding lattice part 123 is touched.

In case the wheel input part 150 is touched in the outer circumferential (rotational) direction, it may be recognized which lattice part 123 is touched, and this recognized information may be transmitted to the output terminal 126 through the pattern part 125.

The mode input part 170 corresponding to the mode print part 122b and the power input part 180 corresponding to the power print part 122c are configured such that they recognize whether or not a specific point is touched. Therefore, when the touch of one of the plurality of mode display parts 172 or the power input part 180 is recognized, whether or not to select the corresponding icons may be determined according to a change in pressure or static capacitance.

The input information transmitted to the output terminal 126 is delivered to the controller 130 via a driver 135. The driver 135 is a driver IC, and may be understood to be a device to provide an input signal or input data in an electrical signal.

The driver 135 may be configured to have a plurality of keys according to the color or size to be displayed. The driver 135 and the controller 130 perform signal transmission according to the I2C communication protocol. The I2C communication protocol is a synchronous communication method, and is understood to be a serial communication protocol.

The controller 130 operates the operating part 80 based on the signal transmitted from the driver 135, controls the operation of the air conditioner 10, and controls the light emitting part 115 to display information on the corresponding operation on the display part 101. The operating part 80 may include a compressor or a blowing fan.

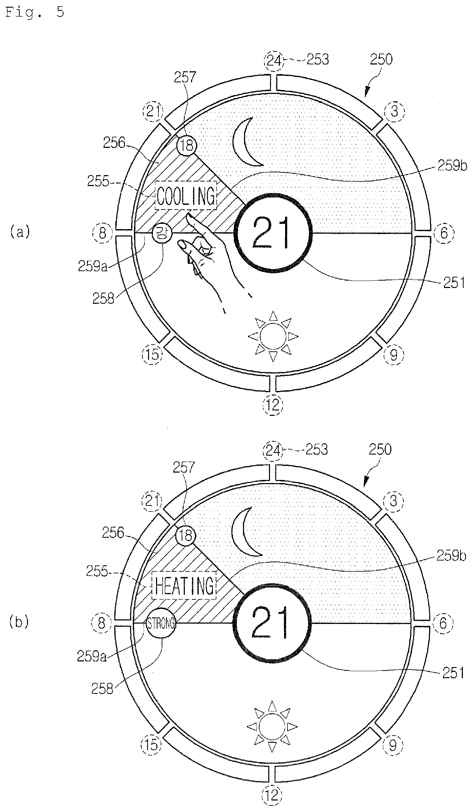

Fig. 5 is a schematic view illustrating the operating figure a wheel input part according to the first embodiment of the present invention.

Referring to Figs. 5a and 5b, a wheel input part 250 according to a second embodiment of the present invention includes a time display part 253 indicating operation time information along the circumferential direction, and a current temperature display part 251 positioned at an inner center of the wheel to display the current temperature.

The time display part 253 may display 24 hours a day along the circumferential direction.

The wheel input part 250 may further include a start time display part 259a indicating a line extended in one direction from the temperature display part 251 to a point of the time display part 253, and an end time display part 259b indicating a line extended in another direction from the temperature display part 251 to another point of the time display part 253.

For the convenience of explanation, the start time display part 259a may be named "first line" and the end time display part 259b may be named "second line".

The start time display part 259a indicates the operation start time of the air conditioner 10, and the end time display part 259b indicates the operation end time of the air conditioner 10. The inner area defined by the start time display part 259a and the end time display part 259b with respect to the entire inner area corresponds to the operation time section of the air conditioner with respect to 24 hours a day.

In summary, the closed area formed by connecting the start time display part 259a, the end time display part 259b, and a portion of the circumference of the wheel input part 150 defines an operation time area 256 indicating the operation time or reservation time of the air conditioner 10.

The color or the intensity of illumination of the operation area 256 may be discriminated from that in the wheel input part 250. In an example, the operation time area 256 may be formed darker or stronger than other areas.

When a user touches the time display part 253 clockwise or counterclockwise, the operation time or reservation time may be set through the touched position or distance of the lattice part 123.

In detail, when a user starts to touch the start time display part 259a or the end time display part 259b and continues to touch the same in a disposition direction of the time display part 253, i.e., clockwise or counterclockwise, the start time display part 259a or the end time display part 259b may rotate.

In this process, the operation time area 256 may be expanded or decreased.

An operation mode display part 255 displaying operation modes of the air conditioner 10 is included within the operation time area 256. In an example, the operation modes may include "cooling", "warming", "dehumidification", "air cleaning", or the like.

A set temperature display part 257 is disposed on any one of the start time display part 259a and the end time display part 259b. The set temperature display part 257 may be provided movable along the start time display part 259a or the end time display part 259b.

In detail, when a user moves the set temperature display part 257 in the outer direction thereof through a touch, the set temperature may be increased, and when a user moves the set temperature display part 257 in the inner direction thereof, the set temperature may be decreased.

At this time, the recognition of the increase or decrease of the set temperature through a touch is performed by a recognition distance corresponding to the length direction of the lattice part 123, and the temperature value displayed on the set temperature display part 257 may be changed corresponding to the moved distance of the set temperature display part 257.

A wind intensity display part 258 is disposed on the other of the start time display part 259a and the end time display part 259b. The wind intensity display part 258 may be provided movable along the start time display part 259a or the end time display part 259b. The movement mechanism of the wind intensity display part 259 is similar to that of the set temperature display part 257.

In detail, when a user starts to touch the wind intensity display part 258 and continues to move the same in the outer direction, the wind intensity may be strengthened, and when the user moves the wind intensity display part 258 in the inner direction in the state that the wind intensity display part 258 is touched, the wind intensity may be weakened. That is, the wind intensity display part 258 may move toward the touched direction.

In an example, when the wind intensity display part 258 is positioned at approximately a center on the start time display part 259a or the end time display part 259b, the wind intensity may be displayed as 'middle", when the wind intensity display part 258 is positioned at an outer side on the start time display part 259a or the end time display part 259b, the wind intensity may be displayed as "strong", and when the wind intensity display part 258 is positioned at an inner side on the start time display part 259a or the end time display part 259b, the wind intensity may be displayed as "weak".

In summary, the set temperature display part 257 may be disposed movable on one of the lines of the start time display part 259a and the end time display part 259b, and the wind intensity display part 258 may be disposed movable on the other one.

In detail, when a user moves the wind intensity display part 258 in the outer direction of the line, the wind intensity may be increased, and when a user moves the wind intensity display part 258 in the inner direction of the line, the wind intensity may be decreased.

At this time, the recognition of the increase or decrease of the wind intensity through a touch is performed by a recognition distance corresponding to the length direction of the lattice part 123

Thus, since the set temperature display part 257 and the wind intensity display part 258 may be provided on the start time display part 259a or the end time display part 259b to adjust the set temperature or wind intensity along the display parts 259a and 259b, a user may input information on the operation of the air conditioner, intuitively and easily.

Meanwhile, the operation mode displayed on the operation mode display part 255 may be changed by touching the inner area of the operation time area 256 or the operation mode display part 255.

Herein, the operation mode display part 255 may be understood to be disposed within the area defined by a first line and a second line of the wheel input part 250 and the circumferential surface of the wheel input part 250.

As described above, first information on the operation of the air conditioner is displayed on the first line, and second information on the operation of the air conditioner is displayed on the second line. In an example, the first information may be one of the set temperature and the discharged wind intensity of the air conditioner, and the second information may be the other.

In detail, the plurality of preset operation modes are defined in the air conditioner 10, and when the operation time area 256 or the operation mode display part 255 is touched, one operation mode displayed on the operation mode display part 255 may be changed into another operation mode and then displayed.

At this time, to change the operation mode, the operation mode display part 255 may be directly touched, or an area formed at an outer side of the operation mode display part 255 in the inner area of the operation time area 256 may be touched.

In this case, the controller 130 may change the content displayed on the operation mode display part 255 based on the input information to control the operation of the air conditioner 10 according to the changed operation mode.

In summary, the operation mode display pare 255 defines the display area displaying information on the operation mode in the display part, and the operation time area 256 enclosing the operation mode display part 255 is defined as an input area inputting information on the operation mode.

In an example, as illustrated in Figs. 5a and 5b, while the air conditioner 10 is operated in the cooling mode, "cooling" may be displayed on the operation mode display part 255, correspondingly to this mode.

When a user touches the inner area of the operation time area 256 or the operation mode display part 255, the displayed operation mode may be changed. That is, as illustrated in Fig. 5b, "cooling" may be changed into "blowing". At this time, the sequence of the operation modes to be changed among the plurality of operation modes may be set in advance.

To change the display of the operation mode, the touching of the inner area of the operation time area 256 or the operation mode display part 255 may be performed by touching the operation time area 256 once or maintaining the touched state during a set time or more.

In case the operation time area 256 is touched once, the display of the operation mode may be changed whenever touched.

On the other hand, if the touched state of the operation time area 256 is maintained during a first set time or more, the display of the operation mode may be changed in the preset sequence. The time interval where the display of the operation mode is changed may be a second set time.

In an example, the first set time may be two seconds, and the second set time may be one second. That is, when the operation time area 256 is touched for 2 seconds or more, the change of the display of the operation mode starts. For example, the display may be changed in the sequence of cooling→warming→dehumidification→air cleaning. The time interval where one operation mode is changed to another operation mode is set to one second.

According to the above configuration, since the operation mode display part 255 is disposed within the operation time area 256, the display of the operation mode is easy and a user may easily confirm the operation mode.

Also, since the operation mode display part is provided on a position within the wheel input part and the operation mode is changed by a touch and is then viewed to a user, the display and change of the operation mode within a limited area are made easy.

Further, since the operation mode may be changed not only by touching the small operation mode display part 255 but also by touching the operation time area 256 larger than the operation mode display part 255, the display device is convenient for a user to operate.

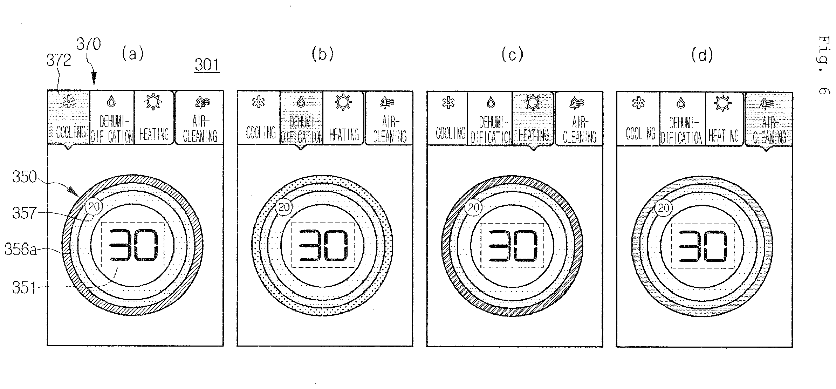

Fig. 6 is a schematic view illustrating the operating figure of a wheel input part according to a second embodiment of the present invention.

Referring to Fig. 6, a display part 301 according to a second embodiment of the present invention a wheel input part 350 having a circular or elliptical shape, and a mode input part 370 provided on an outer side of the wheel input part 350 to input the operation mode of the air conditioner 10.

A plurality of mode display parts 372 corresponding to operation modes of the air conditioner 10 are included within the mode input part 370. The plurality of mode display parts 372 form predetermined areas for input.

As illustrated in Fig. 6a, the operation modes displayed on the mode display part 372 may include "cooling", "dehumidification", "warming", and "air cleaning".

The wheel input part 350 includes a current temperature display part 351 provided on an inner center of the wheel input part 350 to display the current temperature value, a wind intensity display part 356 disposed to enclose the current temperature display part 351 to display the degree of wind intensity, and a set temperature display part 357 disposed at a portion of the wind intensity display part 356 to display the set temperature value of the air conditioner.

The wind intensity display part 356 includes a plurality of circumferential lines having a closed circular or elliptical shape. Description on the circumferential lines 356a quotes that of the first embodiment.

The mode display part 372 is configured to be touch-inputted. That is, the mode display part 372 may be configured to display operation mode information and at the same time to enable a user to input the operation mode. That is, the mode display part 372 may be defined as an input area.

When one of the plurality of operation modes included in the mode display part 372 is selected, the configuration of the wheel input part 350 is determined corresponding to the selected one mode.

In an example, the color of one of the plurality of circumferential lines 356a may be changed according to the selected operation mode. That is, the configuration of the circumferential line 356a corresponding to the respective operation mode may be changed.

In an example, Figs. 6a to 6d illustrate the configuration of the display part 301 as selected in the sequence of cooling, dehumidification, warming, and air cleaning.

As illustrated in the drawings, the color or texture of the outermost circumferential line 356a of the plurality of circumferential lines 356a may be different according to the selected operation mode. That is, the configuration of the wheel input part 350 constituting the display area may be displayed differently according to the selection of the input area (mode display part).

In summary, a mode display part 372 capable of selecting the operation mode is provided on an outer side of the wheel input part 350. When one of the plurality of mode display parts 372 is selected, the controller 130 may perform a control such that the configuration of the wheel input part 350 is changed according to the selected one mode display part 372.

According to the above configuration, since a user may perform touching and then confirm a control item of the air conditioner 10 through the display part 301, the product reliability may be enhanced.

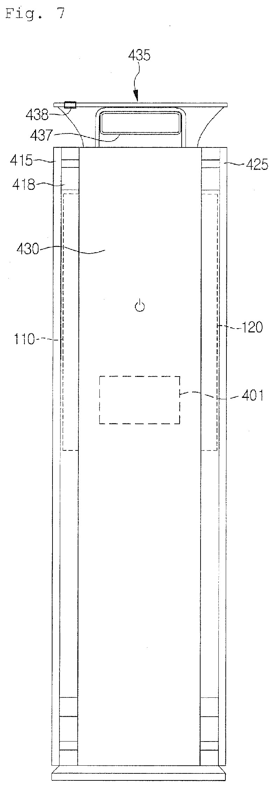

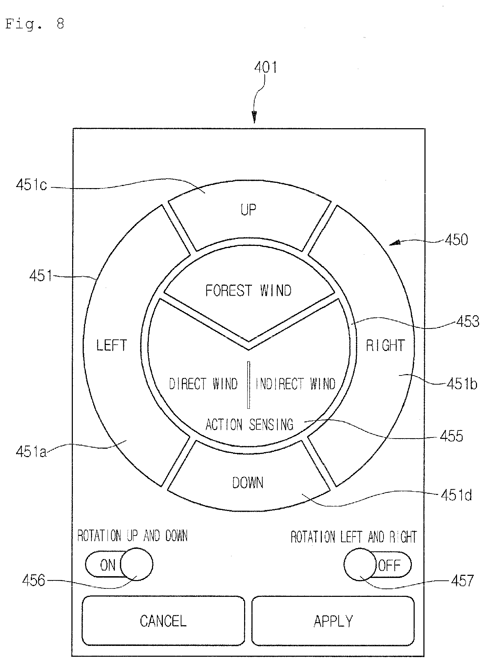

Fig. 7 is a schematic view illustrating the configuration of an air conditioner according to a third embodiment of the present invention, and Fig. 8 is a schematic view illustrating the configuration of a display part according to the third embodiment of the present invention.

Referring to Fig. 7, an air conditioner according to a third embodiment of the present invention includes a front panel 430, and a discharging part 410,420 disposed at both sides of the front panel 430 to discharge air. A discharging grille for preventing foreign particles from being introduced or discharged may be provided on each of the discharging parts 410 and 420.

The front panel 430 is provided with a display part 401.

The discharging part 410, 420 includes a first discharging part 410 disposed at one side of the front panel 430, and a second discharging part 420 disposed at the other side of the front panel 430.

The air conditioner includes a discharging panel 415, 425 provided movable at one side of the discharging part 410, 420 to open or close the discharging part 410, 420. The discharging panel 415, 425 includes a first discharging panel 415 and a second discharging panel 425 capable of opening or closing the first discharging part 410 and the second discharging part 420, respectively.

In an example, when the first discharging panel 415 is closed and the second discharging panel 425 is opened, air may be discharged through the second discharging part 420 at one side, and when the first discharging panel 415 is opened and the second discharging panel 425 is closed, air may be discharged through the first discharging part 410 at the other side.

A discharging vane 418 provided movable is provided on the first discharging part 410 and the second discharging part 420. The discharging vane 418 is configured to control a flow direction of air discharged from the first discharging part 410 or the second discharging part 420.

An upper discharging unit 435 discharging air is provided on an upper side of the air conditioner. The upper discharging unit 435 is provided to be movable in up and down directions.

In detail, when the air conditioner is operated, the upper discharging unit 435 may be protruded upward to discharge air, and when the air conditioner is not operated, the upper discharging unit 435 may be received in the air conditioner.

The upper discharging unit 435 may be rotated in left and right directions so as to control the direction of discharged wind.

The upper discharging unit 435 includes a discharging duct 437 provided tiltable in up and down directions. In a state that the upper discharging unit 435 is protruded upward from the air conditioner, the discharging duct 437 may be tilted in up and down directions, and in the course of this process, the direction of discharged air may be controlled in the up or down direction.

A human body sensing sensor 438 sensing whether or not a user (hereinafter referred to as an "indoor user") exists in an indoor space where the air conditioner is installed or the position of the indoor user is provided on the upper discharging unit 435. The human body sensing sensor 438 may be a pyroelectric infrared ray (PIR) sensor.

The display part 401 includes a wheel input part 450 having a circular or elliptical shape, and a rotation selection part 456, 457 capable of adjusting the rotational direction of the upper discharging unit 435.

The wheel input part 450 includes a direction adjusting part 451 capable of adjusting the direction of air discharged from the air conditioner 10. The direction adjusting part 451 includes a plurality of direction adjusting parts divided into four directions along the circumferential direction of the wheel input part 450.

The plurality of direction adjusting parts include a first direction adjusting part 451a allowing air to be discharged in the left direction of the air conditioner 10, a second direction adjusting part 451b allowing air to be discharged in the right direction of the air conditioner 10, a third direction adjusting part 451c allowing air to be discharged in the up direction of the air conditioner 10, and a fourth direction adjusting part 451d allowing air to be discharged in the down direction of the air conditioner 10.

A user may select one of the plurality of direction adjusting parts to perform a control such that air is discharged in the direction corresponding to the corresponding direction adjusting part.

The selecting of the direction adjusting part may be performed by one-time touching one area where the direction adjusting part is disposed. The selected direction adjusting part may be indicated in a different color or a different intensity of illumination so as to be discriminated from other direction adjusting parts.

Thus, since the plurality of direction adjusting parts are discriminated and arranged in the circumferential direction, a user may intuitively select one direction adjusting part to adjust the discharge direction.

Within the direction adjusting part 451, a discharge mode selecting part 453 defining a circular input area is provided.

The circular discharge mode selecting part 453 is divided into a plurality of areas to display a plurality of mode selecting parts. The plurality of mode selecting parts may include "forest wind (first mode)", "direct wind (second mode)", and "indirect wind (third mode) as operation modes of the air conditioner 10, as illustrated in Fig. 8.

The operation modes may be divided according to the operating method of the operating part 80.

The forest wind may be understood to be a mode in which sound hearable in the forest is outputted from the air conditioner 10 together with one operation method of the operating part 80.

The direct wind and the indirect wind are understood to be modes in which an indoor user is sensed through the human body sensing sensor 438 and whether to directly discharge air toward the indoor user or to indirectly discharge air to the indoor user is determined.

The respective operation modes define the set areas, and when a user touches a corresponding area, the corresponding mode of the selected area may be determined as the operation mode of the air conditioner.

The rotation selecting part 456, 457 includes an up and down rotation selecting part 456 capable of adjusting up and down rotation of the upper discharging unit 350, and a left and right rotation selecting part 457 capable of adjusting left and right rotation of the upper discharging unit 350.

The rotation selecting part 456, 457 is configured to be movable in a horizontal direction by touching, and thus ON/OFF may be controlled.

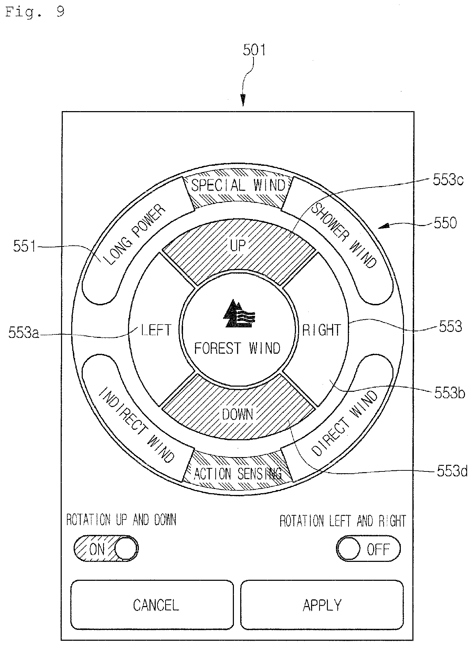

Fig. 9 is a schematic view illustrating the configuration of a display part according to a fourth embodiment of the present invention.

A display part 501 according to a fourth embodiment of the present invention includes a wheel input part 550 having a circular or elliptical shape.

The wheel input part 550 includes a discharge mode selecting part 551 disposed in the circumferential direction of the wheel input part 550, and a direction adjusting part 553.disposed within the discharge mode selecting part 551 to adjust the discharge direction of air.

The discharge mode selecting part 551 may be divided into a plurality of set areas to display a plurality of operation modes. A user may select one operation mode by touching the area corresponding to each operation mode.

The direction adjusting part 553 is formed in approximately a circular shape, and includes a plurality of direction adjusting parts arranged in up, down, left and right directions.

The plurality of direction adjusting parts include a first direction adjusting part 553a allowing air to be discharged in the left direction of the air conditioner 10, a second direction adjusting part 553b allowing air to be discharged in the right direction of the air conditioner 10, a third direction adjusting part 553c allowing air to be discharged in the up direction of the air conditioner 10, and a fourth direction adjusting part 553d allowing air to be discharged in the down direction of the air conditioner 10.

The first to fourth direction adjusting parts 553 are arranged at the positions corresponding to the discharge directions of air to define input areas enabling input.

Thus, since the plurality of direction adjusting parts are discriminated and arranged correspondingly to the discharge direction of air, a user may intuitively select one direction adjusting part to adjust the discharge direction.

According to the present invention, since it is possible to input information on the operation of the air conditioner via the wheel input part, the input method is easy and intuitive.

Also, information change figure by an intuitive input can be easily confirmed on the display device.

Further, since it is easy and simple to input and display information, users may conveniently operate this display device.

Furthermore, since it is possible to input various information on operation of the air conditioner via the wheel input part provided within a predetermined area, the sizes of the input part and the display part may be miniaturized.

In particular, since the display area is provided within an area enabling an input, or the area enabling the input is provided within the display area, or the area enabling the input and the display area may partially overlap each other, it becomes possible to efficiently use a limited area for implementation of an input part and a display part.

Although embodiments have been described with reference to a number of illustrative embodiments thereof, it should be understood that numerous other modifications and embodiments can be devised by those skilled in the art that will fall within the scope of the present invention as defined by the appended claims.

## Claims

1. A display device of an air conditioner comprising:
a film part (120) including a displayable image;
a controller (130) configured to determine whether or not to display the displayable image on the basis of operation information of the air conditioner touch-recognized by the film part;
a light emitting part (115) configured to illuminate light toward the film part in order to display the displayable image; and
a display part (101, 301, 401, 501) provided on a panel (20, 430) of the air conditioner to enable a touch input, and on which the light illuminated from the light emitting part acts,
wherein the display part comprises a display area for displaying operation information of the air conditioner, and an input area for allowing a user to input a command concerning the operation information, and
wherein the controller (130) is configured to control the display part such that the operation information displayed on the display area is changed and/or displayed according to an input in the input area, **characterized in that** the display part (101, 301, 401, 501) comprises a wheel input part (150, 250, 350, 450, 550) having a circular or elliptical shape, and the display area and the input area are disposed on an inner area of the wheel input part; and **in that**
the wheel input part (150, 250, 350, 450, 550) comprises:
a first line (259a) extended in one direction from a center of the wheel input part toward a circumferential surface; and
a second line (259b) extended in another direction from the center of the wheel input part toward the circumferential surface;
wherein the input area is an inner area defined by the first line and the second line within the wheel input part.

2. The display device of claim 1, wherein the display area forms at least a portion of an inner region of the input area.

3. The display device of claim 1 or 2, wherein the display area is disposed within the input area.

4. The display device of claim 3, wherein the input for changing the operation information of the air conditioner is performed through another area except for the display area within the input area.

5. The display device of any one of claims 1 to 4, wherein the first line (259a) is configured to display first information on the operation of the air conditioner thereon, and
the second line (259b) is configured to display second information on the operation of the air conditioner thereon.

6. The display device of claim 5, wherein the first information is one of a set temperature of the air conditioner and an intensity of wind discharged from the air conditioner, and the second information is the other.

7. The display device of any of preceding claims, wherein the operation information displayed on the display area comprises an operation mode defined in the air conditioner.

8. The display device of claim 7, wherein the operation information comprises a plurality of the operation modes, and
the controller is configured so that when an inner region of the input area is touched, an operation mode displayed on the display area is changed according to a preset sequence.

9. The display device of any of preceding claims, wherein the input area comprises a plurality of selectable display sub-parts (122b, 372, 451, 551, 553), and
the controller is configured so that information displayed on the display area when one of the plurality of display sub-parts is selected is different from information displayed on the display area when another display sub-part is selected.

10. The display device of any of preceding claims, wherein the input area includes a direction adjusting part (451, 553) for adjusting an air discharge direction of the air conditioner, and
wherein the direction adjusting part (451, 553) comprises a plurality of direction adjusting sub-parts (451a-d, 553a-d) which are divided and disposed at positions corresponding to the air discharge directions.

11. The display device of any of claims 1 to 6, wherein the input area is defined by a plurality of lines extended in a radial direction from a center of the wheel input part (150, 250, 350, 450, 550), and outer circumferential surfaces of the wheel input part.

12. The display device of any of preceding claims, wherein when the input area is one time touched, the information displayed on the display area is changed in a set sequence.

13. The display device of any of preceding claims, wherein when the input area is kept being touched for a set time or longer, the information displayed on the display area is changed in a set sequence.

## Patentansprüche

1. Anzeigevorrichtung einer Klimaanlage mit:
einem Folienelement (120), das ein anzeigbares Bild aufweist,
einem Steuergerät (130), das ausgebildet ist, um auf Basis von Betriebsinformationen der Klimaanlage, welche vom Folienelement durch Berührungserkennung erkannt werden, zu bestimmen, ob das anzeigbare Bild angezeigt werden soll oder nicht,
einem lichtemittierenden Element (115), das ausgebildet ist, um Licht zum Folienteil auszustrahlen, um das anzeigbare Bild anzuzeigen, und
einem Anzeigeelement (101, 301, 401, 501), das auf einer Konsole (20, 430) der Klimaanlage vorgesehen ist, um eine Berührungseingabe zu ermöglichen und auf das das vom lichtemittierenden Element ausgestrahlte Licht wirkt,
wobei die Anzeigevorrichtung einen Anzeigebereich zum Anzeigen von Betriebsinformationen der Klimaanlage und einen Eingabebereich aufweist, über welchen ein Nutzer einen Betriebsinformationsbefehl eingeben kann, und
das Steuergerät (130) ausgebildet ist, um das Anzeigeelement so zu steuern, dass sich die auf dem Anzeigeelement angezeigten Betriebsinformationen ändern und/oder gemäß einer Eingabe im Eingabebereich angezeigt werden,
**dadurch gekennzeichnet, dass**
das Anzeigeelement (101, 301, 401, 501) ein radförmiges Eingabeelement (150, 250, 350, 450, 550) mit einer kreisförmigen oder elliptischen Form aufweist und der Anzeigebereich und der Eingabebereich in einem Innenbereich des radförmigen Eingabeteils angeordnet sind, und
das radförmige Eingabeelement (150, 250, 350, 450, 550) aufweist:
eine erste Linie (259a), welche sich in einer Richtung von einer Mitte des radförmigen Eingabeelements zu einer Umfangsfläche erstreckt, und
eine zweite Linie (259b), welche sich in einer anderen Richtung von der Mitte des radförmigen Eingabeelements zur Umfangsfläche erstreckt,
wobei der Eingabebereich ein Innenbereich ist, der durch die erste Linie und die zweite Linie im radförmigen Eingabeteil definiert ist.

2. Anzeigevorrichtung nach Anspruch 1, wobei der Anzeigebereich mindestens einen Teil eines Innenbereichs des Eingabebereichs bildet.

3. Anzeigevorrichtung nach Anspruch 1 oder 2, wobei der Anzeigebereich im Eingabebereich angeordnet ist.

4. Anzeigevorrichtung nach Anspruch 3, wobei die Eingabe zum Ändern der Betriebsinformationen der Klimaanlage über einen anderen Bereich im Eingabebereich mit Ausnahme des Anzeigebereichs erfolgt.

5. Anzeigevorrichtung nach einem der Ansprüche 1 bis 4, wobei die erste Linie (259a) ausgebildet ist, um darauf eine erste Information zum Betrieb der Klimaanlage darzustellen, und
die zweite Linie (259b) ausgebildet ist, um darauf eine zweite Information zum Betrieb der Klimaanlage darzustellen.

6. Anzeigevorrichtung nach Anspruch 5, wobei die erste Information entweder eine bestimmte Temperatur der Klimaanlage oder eine Intensität der von der Klimaanlage ausgestoßenen Luft ist und die zweite Information die jeweils andere Information ist.

7. Anzeigevorrichtung nach einem der vorhergehenden Ansprüche, wobei die im Anzeigebereich angezeigten Betriebsinformationen eine in der Klimaanlage definierte Betriebsart aufweisen.

8. Anzeigevorrichtung nach Anspruch 7, wobei die Betriebsinformationen mehrere Betriebsarten aufweisen und
das Steuergerät so ausgebildet ist, dass eine im Anzeigebereich angezeigte Betriebsart bei Berührung eines Innenbereichs des Eingabebereichs gemäß einer bestimmten Reihenfolge geändert wird.

9. Anzeigevorrichtung nach einem der vorhergehenden Ansprüche, wobei der Eingabebereich mehrere auswählbare Anzeigeunterelemente (122b, 372, 451, 551, 553) aufweist, und
das Steuergerät so ausgebildet ist, dass sich die bei Auswahl eines der mehreren Anzeigeunterelemente im Anzeigebereich angezeigten Informationen von den bei Auswahl eines anderen Anzeigeunterelements im Anzeigebereich angezeigten Informationen unterscheiden.

10. Anzeigevorrichtung nach einem der vorhergehenden Ansprüche, wobei der Eingabebereich ein Richtungsstelleelement (451, 553) zum Einstellen einer Luftausstoßrichtung der Klimaanlage aufweist und
wobei das Richtungsstellelement (451, 553) mehrere Richtungsstellunterelemente (451a-d, 553a-d) aufweist, die an Stellen unterteilt und angeordnet sind, welche den Luftausstoßrichtungen entsprechen.

11. Anzeigevorrichtung nach einem der Ansprüche 1 bis 6, wobei der Eingabebereich durch mehrere Linien, die sich in einer radialen Richtung von einer Mitte des radförmigen Eingabeelements (150, 250, 350, 450, 550) erstrecken, und Außenumfangsflächen des radförmigen Eingabeelements definiert ist.

12. Anzeigevorrichtung nach einem der vorhergehenden Ansprüche, wobei die im Anzeigebereich angezeigten Informationen bei einmaliger Berührung des Eingabebereichs in einer bestimmten Reihenfolge geändert werden.

13. Anzeigevorrichtung nach einem der vorhergehenden Ansprüche, wobei die im Anzeigebereich angezeigten Informationen bei anhaltender Berührung des Eingabebereichs über einen bestimmten Zeitraum oder länger in einer bestimmten Reihenfolge geändert werden.

## Revendications

1. Dispositif d'affichage d'un climatiseur comprenant :
une partie de film (120) incluant une image affichable ;
une unité de commande (130) configurée pour déterminer s'il faut ou non afficher l'image affichable sur la base d'informations de fonctionnement du climatiseur reconnues tactilement par la partie de film ;
une partie d'émission de lumière (115) configurée pour diffuser de la lumière vers la partie de film afin d'afficher l'image affichable ; et
une partie d'affichage (101, 301, 401, 501) prévue sur un panneau (20, 430) du climatiseur pour permettre une entrée tactile, et sur laquelle agit la lumière diffusée par la partie émettrice de lumière,
dans lequel la partie d'affichage comprend une zone d'affichage pour afficher des informations de fonctionnement du climatiseur, et une zone d'entrée pour permettre à un utilisateur d'entrer une instruction concernant les informations de fonctionnement, et
dans lequel l'unité de commande (130) est configurée pour commander la partie d'affichage de telle sorte que les informations de fonctionnement affichées sur la zone d'affichage sont changées et/ou affichées selon une entrée dans la zone d'entrée,
**caractérisé en ce que**
la partie d'affichage (101, 301, 401, 501) comprend une partie d'entrée formant roue (150, 250, 350, 450, 550) ayant une forme circulaire ou elliptique, et la zone d'affichage et la zone d'entrée sont disposées sur une zone interne de la partie d'entrée formant roue ; et **en ce que**
la partie d'entrée formant roue (150, 250, 350, 450, 550) comprend :
une première ligne (259a) s'étendant dans une direction allant d'un centre de la partie d'entrée formant roue vers une surface circonférentielle ; et
une seconde ligne (259b) s'étendant dans une autre direction allant du centre de la partie d'entrée formant roue vers la surface circonférentielle ;
dans lequel la zone d'entrée est une zone interne définie par la première ligne et la seconde ligne à l'intérieur de la partie d'entrée formant roue.

2. Dispositif d'affichage selon la revendication 1, dans lequel la zone d'affichage forme au moins une partie d'une région interne de la zone d'entrée.

3. Dispositif d'affichage selon la revendication 1 ou 2, dans lequel la zone d'affichage est disposée à l'intérieur de la zone d'entrée.

4. Dispositif d'affichage selon la revendication 3, dans lequel l'entrée pour changer les informations de fonctionnement du climatiseur est effectuée par le biais d'une autre zone à l'exception de la zone d'affichage à l'intérieur de la zone d'entrée.

5. Dispositif d'affichage selon l'une quelconque des revendications 1 à 4, dans lequel la première ligne (259a) est configurée pour afficher une première information sur le fonctionnement du climatiseur, et
la seconde ligne (259b) est configurée pour afficher une seconde information sur le fonctionnement du climatiseur.

6. Dispositif d'affichage selon la revendication 5, dans lequel la première information est l'une d'une température définie du climatiseur et d'une intensité du vent évacué à partir du climatiseur, et la seconde information est l'autre.

7. Dispositif d'affichage selon l'une quelconque des revendications précédentes, dans lequel les informations de fonctionnement affichées sur la zone d'affichage comprennent un mode de fonctionnement défini dans le climatiseur.

8. Dispositif d'affichage selon la revendication 7, dans lequel les informations de fonctionnement comprennent une pluralité des modes de fonctionnement, et
l'unité de commande est configurée de telle sorte que lorsqu'une région interne de la zone d'entrée est touchée, un mode de fonctionnement affiché sur la zone d'affichage est changé selon une séquence prédéfinie.

9. Dispositif d'affichage selon l'une quelconque des revendications précédentes, dans lequel la zone d'entrée comprend une pluralité de sous-parties d'affichage sélectionnables (122b, 372, 451, 551, 553), et
l'unité de commande est configurée de telle sorte que les informations affichées sur la zone d'affichage lorsqu'une de la pluralité de sous-parties d'affichage est sélectionnée sont différentes des informations affichées sur la zone d'affichage lorsqu'une autre sous-partie d'affichage est sélectionnée.

10. Dispositif d'affichage selon l'une quelconque des revendications précédentes, dans lequel la zone d'entrée inclut une partie de réglage de direction (451, 553) pour régler une direction d'évacuation d'air du climatiseur, et
dans lequel la partie de réglage de direction (451, 553) comprend une pluralité de sous-parties de réglage de direction (451a-d, 553a-d) qui sont divisées et disposées à des positions correspondant aux directions d'évacuation d'air.

11. Dispositif d'affichage selon l'une quelconque des revendications 1 à 6, dans lequel la zone d'entrée est définie par une pluralité de lignes s'étendant dans une direction radiale à partir d'un centre de la partie d'entrée formant roue (150, 250, 350, 450, 550), et des surfaces circonférentielles externes de la partie d'entrée formant roue.

12. Dispositif d'affichage selon l'une quelconque des revendications précédentes, dans lequel lorsque la zone d'entrée est touchée une seule fois, les informations affichées sur la zone d'affichage sont changées selon une séquence définie.

13. Dispositif d'affichage selon l'une quelconque des revendications précédentes, dans lequel lorsque la zone d'entrée reste touchée pendant un temps défini ou plus longtemps, les informations affichées sur la zone d'affichage sont changées selon une séquence définie.
